# EUROPEAN PATENT APPLICATION

(11) **EP 2 930 993 A1**
(43) Date of publication of application: **14.10.2015**
(21) Application number: 14164062.3
(22) Date of filing: 09.04.2014
(51) Int. Cl.: H04W 72/12, H04L 12/851

(54) **Determining priority for signalling**

(71) Applicant: Telefonaktiebolaget L M Ericsson (PUBL), 164 83 Stockholm (SE)
(72) Inventor: Karlsson, Robert, 17462 Sundbyberg (SE); Hurd, Magnus, 11867 Stockholm (SE); Skärby, Christian, 11351 Stockholm (SE); Gaigalas, Raimundas, 16937 Solna (SE)
(74) Representative: Ericsson

(57) **Abstract**

It is presented a method for determining first signalling priority of a message of a signalling radio bearer of a first service. The method is performed in a radio network node of a cellular communication network and comprises the steps of: obtaining a first data priority associated with a data radio bearer of the first service; obtaining a second data priority associated with a data radio bearer of a second service; determining the first signalling priority to be lower than or equal to the second data priority when the second data priority is higher than the first data priority; and assigning the first signalling priority to the message of the signalling radio bearer of the first service. Corresponding radio network nodes, computer program and computer program product are also presented.

## Description

### TECHNICAL FIELD

The invention relates to a method, a radio network node, a computer program and computer program product for determining a priority for signalling.

### BACKGROUND

In cellular communication networks, both data and signalling need to be communicated downlink (to the wireless device) and uplink (from the wireless device). Data includes e.g. voice data, video data, web browsing data, data for apps, etc. and are carried on radio over one or more logical channels called data radio bearers (DRB). Signalling is used for controlling the communication and is carried on radio over a logical channel called a signalling radio bearer (SRB).

One difference between SRBs and DRBs is that SRBs carry information which is terminated within the wireless system (e.g. a Radio Access Network, RAN) which in itself is not very useful or interesting to the end user, while DRBs carry the actual service data which is directly useful for the user. There are also cases where DRBs carry in-band signaling that is of similar importance to SRB traffic. DRBs can be prioritised, for example to give higher priority to real-time traffic such as Voice over Internet Protocol (VoIP) than traffic which is not as time sensitive, such as file transfers.

SRBs carry information which can be used for procedures to set up and maintain the user's radio connection. Should data carried by an SRB be lost or delayed, the procedure which depends on the message might fail, often resulting in the user's connection to the network being dropped. Hence, SRBs are assigned high priority when scheduling air interface resources compared to DRBs, in order to minimise the risk of delays and to give as much time as possible to retransmit packets which are lost over the air.

When SRBs and DRBs share common resources, such as a wireless communication channel, there is a problem of how to prioritise between SRB and DRB traffic. In situations with increases in high priority traffic, or where new users enters the system creating high priority traffic, the high priority traffic might use all of the shared resources meaning that low priority traffic will be starved.

To allow every user in a wireless system to have SRB traffic to keep their connection alive, even users with only low priority DRBs have the capability of starving high priority DRBs with their signaling.

When traffic approaches the capacity limit, this starts to cause problems of dropped packets, etc., increasing signalling even further which floods the radio link with signalling traffic, blocking all user data traffic.

### SUMMARY

It is an object to provide a better way of determining a signalling priority of a message of a signalling radio bearer.

According to a first aspect, it is presented a method for determining first signalling priority of a message of a signalling radio bearer of a first service. The method is performed in a radio network node of a cellular communication network and comprises the steps of: obtaining a first data priority associated with a data radio bearer of the first service; obtaining a second data priority associated with a data radio bearer of a second service; determining the first signalling priority to be lower than or equal to the second data priority when the second data priority is higher than the first data priority; and assigning the first signalling priority to the message of the signalling radio bearer of the first service. By coupling the priority of messages on the signalling radio bearer with the priority of an associated data radio bearer, better prioritisation is achieved. In particular, messages of signalling radio bearers associated with low priority data radio bearers will not pre-empt data radio bearers of higher priority.

The step of determining may comprise determining the first signalling priority to be lower than the second data priority when the second data priority is higher than the first data priority.

The method may further comprise the step of: adjusting the first data priority and second data priority to provide respective signalling priority slots between each set of two consecutive data priorities. In such a case, the step of determining the signalling priority comprises determining the first signalling priority to correspond to one of the signalling priority slots. In this way, priorities for signalling radio bearer messages and data radio bearers can be kept separate. Hence, for each data radio bearer priority, there can be a signalling radio bearer priority directly above in priority, which in turn is still lower than the next, more prioritised, data radio bearer.

The step of adjusting data priorities may comprise multiplying previous data priorities with a constant.

The step of obtaining a first data priority may comprise obtaining the first data priority from a Quality of Service Class Identifier of a message of the first data radio bearer; and the step of obtaining a second data priority may comprise obtaining the second data priority from a Quality of Service Class Identifier of a message of the second data radio bearer.

The step of obtaining a first data priority may comprise obtaining the first data priority from a Allocation and Retention Priority of the first data radio bearer; and the step of obtaining a second data priority may comprise obtaining the second data priority from a Allocation and Retention Priority of the second data radio bearer.

The method may further comprise the step of: scheduling transmission of the message based on the signalling priority.

According to a second aspect, it is presented a radio network node for determining priority of a message of a signalling radio bearer of a first service of a cellular communication network. The radio network node comprises: a processor; and a memory storing instructions that, when executed by the processor, causes the radio network node to: obtain a first data priority associated with a data radio bearer of the first service; obtain a second data priority associated with a data radio bearer of a second service; determine the first signalling priority to be lower than or equal to the second data priority when the second data priority is higher than the first data priority; and assign the first signalling priority to the message of the signalling radio bearer of the first service.

The instructions to determine may comprise instructions that, when executed by the processor, causes the radio network node to determine the first signalling priority to be lower than the second data priority when the second data priority is higher than the first data priority.

The radio network node may further comprise instructions that, when executed by the processor, causes the radio network node to adjust data priorities to provide respective signalling priority slots between two consecutive data priorities. In such a case, the instructions to determine the signalling priority comprise instructions that, when executed by the processor, causes the radio network node to determine the signalling priority to correspond to one of the signalling priority slots.

The instructions to adjust data priorities may comprise instructions that, when executed by the processor, causes the radio network node to multiply previous data priorities with a constant.

The instructions to obtain a first data priority may comprise instructions that, when executed by the processor, causes the radio network node to obtain the first data priority from a Quality of Service Class Identifier of a message of the first data radio bearer; and the instruction to obtain a second data priority may comprise instructions that, when executed by the processor, causes the radio network node to obtain the second data priority from a Quality of Service Class Identifier of a message of the second data radio bearer.

The instructions to obtain a first data priority may comprise instructions that, when executed by the processor, causes the radio network node to obtain the first data priority from a Allocation and Retention Priority of the first data radio bearer; and the instructions to obtain a second data priority may comprise instructions that, when executed by the processor, causes the radio network node to obtain the second data priority from a Allocation and Retention Priority of the second data radio bearer.

The radio network node may further comprise instructions that, when executed by the processor, causes the radio network node to schedule transmission of the message based on the signalling priority.

According to a third aspect, it is presented a radio network node comprising: means for obtaining, in a cellular communication network, a first data priority associated with a data radio bearer of a first service; means for obtaining a second data priority associated with a data radio bearer of a second service; means for determining the first signalling priority to be lower than or equal to the second data priority when the second data priority is higher than the first data priority; and means for assigning the first signalling priority to the message of the signalling radio bearer of the first service.

The means for determining may comprise means for determining the first signalling priority to be lower than the second data priority when the second data priority is higher than the first data priority.

The radio network node may further comprise means for adjusting the first data priority and second data priority to provide respective signalling priority slots between each set of two consecutive data priorities. In such a case, the means for determining the signalling priority comprises means for determining the first signalling priority to correspond to one of the signalling priority slots.

The means for adjusting data priorities may comprise means for multiplying previous data priorities with a constant.

The means for obtaining a first data priority may comprise means for obtaining the first data priority from a Quality of Service Class Identifier of a message of the first data radio bearer; and the means for obtaining a second data priority may comprise means for obtaining the second data priority from a Quality of Service Class Identifier of a message of the second data radio bearer.

The means for obtaining a first data priority may comprise means for obtaining the first data priority from a Allocation and Retention Priority of the first data radio bearer; and the means for obtaining a second data priority may comprise means for obtaining the second data priority from a Allocation and Retention Priority of the second data radio bearer.

The radio network node may further comprise means for scheduling transmission of the message based on the signalling priority.

According to a fourth aspect, it is presented a computer program for determining priority of a message of a signalling radio bearer of a first service. The computer program comprises computer program code which, when run on a radio network node of a cellular communication network causes the radio network node to: obtain a first data priority associated with a data radio bearer of the first service; obtain a second data priority associated with a data radio bearer of a second service; determine the first signalling priority to be lower than or equal to the second data priority when the second data priority is higher than the first data priority; and assign the first signalling priority to the message of the signalling radio bearer of the first service.

According to a fifth aspect, it is presented a computer program product comprising a computer program according to the fourth aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram illustrating a cellular communication network where embodiments presented herein may be applied;
Fig 2 is a schematic diagram illustrating services and priorities for downlink communication from the radio network node to the wireless devices of Fig 1 according to one embodiment;
Fig 3 is a schematic diagram illustrating services and priorities for uplink communication from the wireless devices to the radio network node of Fig 1 according to one embodiment;
Figs 4A-B are flow charts illustrating embodiments of methods for determining priority for a message of a signalling radio bearer;
Fig 5 is a schematic diagram showing some components of the radio network node of Figs 1-3;
Fig 6 is a schematic diagram showing functional modules of the software instructions of the radio network node of Fig 5 according to one embodiment; and
Fig 7 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

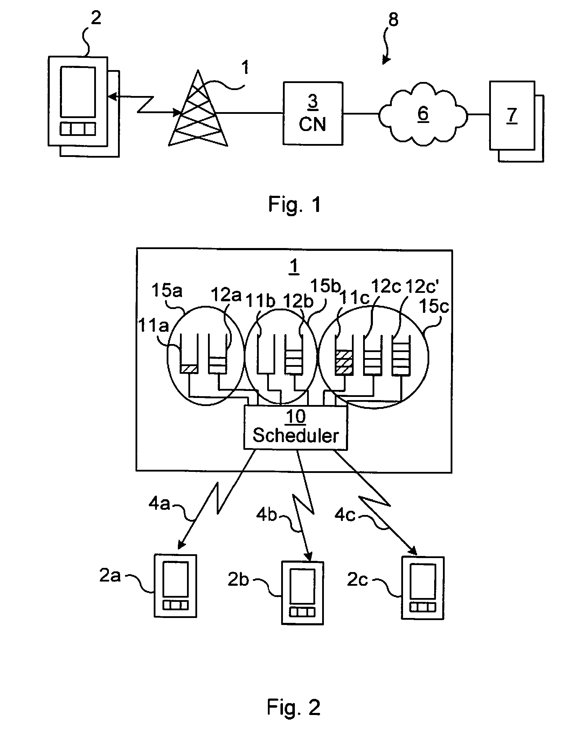

Fig 1 is a schematic diagram illustrating a cellular communication network 8 where embodiments presented herein may be applied. The cellular communication network 8 comprises a core network 3 and one or more radio network nodes 1, here in the form of radio base stations being evolved Node Bs, also known as eNode Bs or eNBs. The radio network node 1 could also be in the form of Node Bs, BTSs (Base Transceiver Stations) and/or BSSs (Base Station Subsystems), etc. The radio network node 1 provides radio connectivity over a wireless interface to a plurality of wireless devices 2. The term wireless device is also known as mobile communication terminal, user equipment (UE), mobile terminal, user terminal, user agent, wireless terminal, machine-to-machine device etc., and can be, for example, what today are commonly known as a mobile phone or a tablet/laptop with wireless connectivity. The term wireless is here to be construed as having the ability to perform wireless communication. More specifically, the wireless device 2 can comprise a number of wires for internal and/or external purposes.

The cellular communication network 8 may e.g. comply with any one or a combination of LTE (Long Term Evolution), W-CDMA (Wideband Code Division Multiplex), EDGE (Enhanced Data Rates for GSM (Global System for Mobile communication) Evolution), GPRS (General Packet Radio Service), CDMA2000 (Code Division Multiple Access 2000), or any other current or future wireless network, such as LTE-Advanced, as long as the principles described hereinafter are applicable.

Over the wireless interface, uplink (UL) communication occurs from the wireless device 2 to the radio network node 1 and downlink (DL) communication occurs from the radio network node 1 to the wireless device 2. The quality of the wireless radio interface to each wireless device 2 can vary over time and depends on the position of the wireless device 2, due to effects such as fading, multipath propagation, interference, etc.

The radio network node 1 is also connected to the core network 3 for connectivity to central functions and a wide area network 6, such as the Internet. There are several content sources 7 connected to the Internet.

Fig 2 is a schematic diagram illustrating services and priorities for downlink communication from the radio network node to the wireless devices of Fig 1 according to one embodiment.

In this example, the radio network node 1 has, a first DL service 15a for DL communication 4a to a first wireless device 2a, a second DL service 15b for DL communication 4b to a second wireless device 2b and a third DL service 15c for DL communication 4c to a third wireless device 2c.

The first DL service 15a comprises a first DL SRB 11a and a first DL DRB 12a. The second DL service 15b comprises a second DL SRB 11b and a second DL DRB 12b. The third DL service 15c comprises a third DL SRB 11c, a third DL DRB 12c and a fourth DL DRB 12d.

A scheduler 10 schedules the DL traffic from all the SRBs and DRBs in accordance with the priority of each message (packet) for the different services 15a-c.

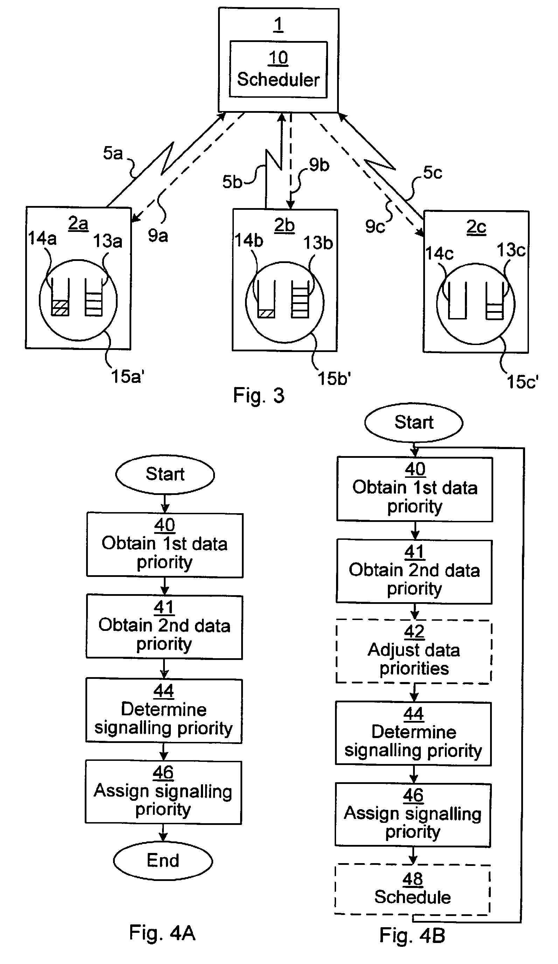

Fig 3 is a schematic diagram illustrating services and priorities for uplink communication from the wireless devices to the radio network node of Fig 1 according to one embodiment.

In this example, the there is a first UL service 15a' for UL communication 5a from the first wireless device 2a, a second UL service 15b' for UL communication 5b from the second wireless device 2b and a third UL service 15c' for UL communication 5c from the third wireless device 2c.

The first UL service 15a comprises a first UL SRB 14a and a first UL DRB 13a. The second UL service 15b comprises a second UL SRB 14b and a second UL DRB 13b. The third UL service 15c comprises a third UL SRB 14b and a third UL DRB 13c.

A scheduler 10 schedules the UL traffic from all the SRBs and DRBs in accordance with the priority of each message (packet) for the different services 15a'-c'.

The prioritisation of bearers and messages will now be discussed with reference to both Fig 2 and 3. Different DRBs (or messages of different DRBs) can be assigned different priorities, which is a natural element in any network which uses shared resources. Should congestion occur, in the sense that one node in the network cannot manage to deliver all its packets to their destination immediately, the scheduler will start to deliver the packets belonging to the highest priority service (as opposed to for example first-come-first-serve).

There are many reasons why a certain service should be prioritised over another. One reason is that some services are more sensitive to delays, e.g. a real time service such as voice calls. Another reason is that an end user or service provider has paid extra for premium quality. Yet another reason can be that the content is of important nature and should not be lost if the congestion happens to be persistent.

A consequence of service priority is service protection. Service protection serves two main purposes. Firstly, this prevents that too many concurrent high priority services generate a congestion situation where none of them get served in an adequate manner. Secondly, leaving some headroom for low priority (best effort) type of traffic ensures that such traffic is not completely blocked out of the system.

Service protection can be provided by an admission control function rejecting new services whenever there is a congestion situation. If admission control is too relaxed (a tendency to admit too many services) or fails, a congestion control function can pre-empt already admitted services not being served in an adequate manner.

One illustrative example of where service protection is useful compared to when it is less useful is a voice call versus a file transfer. For the voice call, it is of value to the end user if the network can indicate that all packets will be delivered on time before the call even starts. If the network cannot guarantee the delivery, the end user will be notified that the network is busy and that he/she should try later. Although this may be frustrating for the user, this is considerably less frustrating than having the voice call drop in the middle of a conversation. A voice call is a typical example of a Guaranteed Bit Rate (GBR) service, where the GBR notation means that the network "signs a contract" that it will deliver packets up to the rate indicated by the GBR on time when it admits the service.

A file transfer on the other hand, can be started by the end user in a more "fire and forget"-fashion. In this case the end user typically just wants to start the transfer and let it be done when it is done. Informing him that the file cannot be transferred at the moment and that he should try again later would be much more annoying that seeing that the bitrate is low and deciding whether to cancel the download or not. A file transfer is a typical example of a Best Effort (BE) type of service. The network can just admit the service and give it whatever resources it has to spare, no strings attached.

Typically, the priority of a DRB is given by the higher layer which requests the establishment of the DRB. E.g. in LTE the priority is indicated by a QCI (Quality of Service Class Identifier) determined by a Policy and Charging Rules Function (PCRF) in Evolved Packet Core (EPC). The PCRF is unaware of SRBs and does not provide any instructions on how they shall be prioritised. How to enforce/handle the priority of the DRBs as well as SRBs is completely up to the lower layer (eNodeB in case of LTE).

When SRBs and DRBs share common resources, such as a wireless communication channel, there is a problem of how to prioritise between SRB and DRB traffic. In situations with increases in high priority traffic, or where new users enter the system creating high priority traffic, the high priority traffic might use all of the shared resources resulting in that low priority traffic will be starved.

This prioritisation scheme poses a great threat to the element of service prioritisation and protection. Since every user in a wireless system needs SRB traffic to keep their connection alive, even users with only BE DRBs (denoted BE users from now on) have the capability of starving GBR DRBs with their signaling on SRBs.

Although rejecting BE services in admission control based on signaling load can prevent disaster in this case, it still does not allow for service differentiation since any new connection requests for GBR services will be rejected due to signaling generated by existing BE services. In other words, existing BE services block out new GBR service connections.

A congestion control that pre-empt services not being adequately served also poses a threat of GBR services being pre-empted because of signaling load from BE DRBs.

A way to mitigate the issues described is to prevent low priority SRBs from having higher priority than high priority DRBs. For example, looking at the DL example of Fig 2, if the first DRB 12a of the first DL service 15a is a high priority service and the second DRB 12b of the second DL service 15b is a low priority service, then the priority of the second SRB 11b (of the second DL service) is set to be lower than or equal to the priority of the first DRB 12a (of the first DL service 15a). This prevents signalling from the second DL service 15b to pre-empt the data of the first DL service 15a. The same also holds true in the scenario that the second service 15b is established and the first service 15a connects to the radio network node 1.

By employing the lowered signalling prioritisation for services with lower priority, prioritisation of signaling traffic versus user data traffic is made more efficient where they share common resources. In overload scenarios with growing number of users (with both signaling and data traffic), or at sudden increases of signaling traffic, the users will experience a quality of service according to the defined priority (instead of signaling traffic dominating the resources and starving even high priority data traffic).

If there are more and more services added (or there is some events resulting in large increases in SRB traffic for existing users) eventually all the SRBs associated with low priority DRBs cannot be supported nor can the low priority DRBs be supported. Thus, the system can dynamically and efficiently decide what DRB data that shall be prioritised over what SRB data.

Since SRB traffic is prioritised according to supported DRBs, admission control based on load due to different services is made more accurate. Any SRB traffic related to BE users would not be considered in admission control for a GBR service. Also, any SRB traffic with low priority can now be excluded from the load considered in admission control.

For congestion control based on pre-empting services not being adequately served, the accuracy is improved; a DRB of a high priority service is not affected by the fraction of SRB traffic that supports less important services or functions. The same benefit applies for reactive admission control schemes based on the blocking of new requests for services classes not being properly served in RAN.

Figs 4A-B are flow charts illustrating embodiments of methods for determining a first signalling priority of a message of an SRB of a first service. The method is performed in a radio network node (such as the radio network node of Figs 1-3). According to this method, in line with what is describe above, SRB priority will not always be higher than all the DRB priorities. The description here focuses on SRB traffic, how messages are assigned priorities according to the importance. The description is also valid to other signaling, such as the signaling of RLC (Radio Link Control) status messages carried in-band on DRB.

In an *obtain 1^{st} data priority* step 40, a first data priority is obtained, which is associated with an SRB of the first service.

In one embodiment, this step comprises obtaining the first data priority from a QCI of a message of the first SRB.

In one embodiment, this step comprises obtaining the first data priority from an Allocation and Retention Priority (ARP) of the first SRB.

In an *obtain 2^{nd} data priority* step 41, a second data priority is obtained, which is associated with an SRB of a second service.

In one embodiment, this step comprises obtaining the second data priority from a Quality of Service Class Identifier of a message of the second SRB.

In one embodiment, this step comprises obtaining the second data priority from a Allocation and Retention Priority of the second SRB.

In a *determine signalling priority* step 44, the first signalling priority is determined to be lower than or equal to the second data priority when the second data priority is higher than the first data priority. In other words, the message of a high priority DRB has a priority at least as high as priority of a message of an SRB associated with a DRB of lower priority.

In one embodiment, this comprises determining the first signalling priority to be lower than the second data priority when the second data priority is higher than the first data priority. In other words, the message of a high priority DRB has a priority which is greater than as the priority of a message of an SRB associated with a DRB of lower priority.

In one embodiment, the radio network node assigns priority to a message of an SRB depending on the importance of the actual message. In order to reduce the number of priorities needed for all kinds of messages carried on SRBs, it is possible to categorise messages into three families (in order of priority, most important first):
1. SYSTEM_CRITICAL
2. USER_CRITICAL
3. NOT_CRITICAL

Family 1 has a system wide high priority (higher than any DRB), family 2 has a "user wide" high priority (in relation to the DRBs of a particular user) and 3 has a system wide low priority (lower than any DRB).

In an *assign signalling priority* step 46, the first signalling priority is assigned to the message of the SRB of the first service.

The method of Fig 4B is similar to the method of Fig 4A. Only added or modified steps will be described here.

In an optional *adjust data priorities* step 42, the first data priority and second data priority are adjusted to provide respective signalling priority slots between each set of two consecutive data priorities. In such a case, the *determine signalling priority* step 44 comprises determining the first signalling priority to correspond to one of the signalling priority slots.

In other words, the incoming priorities are inflated to make room for a higher granularity internal priority range. For example, the signalling priority slots are achieved by multiplying previous data priorities with a constant. In other words, an incoming priority of N is turned into an internal priority a*N, where "a" is the desired granularity increase. For example, a=2 would generate additional priority slots to make room for SRBs versus DRBs, where DRBs have even priority values and SRBs have odd priority values (SRB priority for one user would be one step higher than highest DRB priority of that user), a=3 would allow for two types of internal signaling etc. This scheme allows for having some types of signaling prioritised lower than DRB.

In case the SRB needs resources to support more than one DRB (typically belonging to one wireless device), the highest priority N of the DRBs can be selected. Further use of tiebreaker or mapping to selected priority N into SRB priority works as explained above. Note that the SRB does not necessarily only relate to the DRBs of the wireless device in consideration. In handover signalling over an SRB, should the wireless device not be handed over before it moves out of coverage from the serving cell, it might move deeply into a neighbouring cell and cause excessive interference before dropping. Hence, the SRB can actually in this case be considered to support all DRBs in the system. However, it may be simpler in these cases to apply a static high priority as described in above (see family 1).

In an optional *schedule* step 48, transmission of the message is scheduled based on the signalling priority.

One way to fit user critical SRB prioritisation into an existing priority range is to simply make traffic type the tie breaker. For example, if an SRB and a DRB competing for resources have the same priority, the SRB wins. However in case the SRB had lower priority it would not win. In the prior art, the SRB always wins, which leads to the problems discussed above. If an SRB and another SRB (or a DRB and another DRB) competes for resources the one with the highest priority wins.

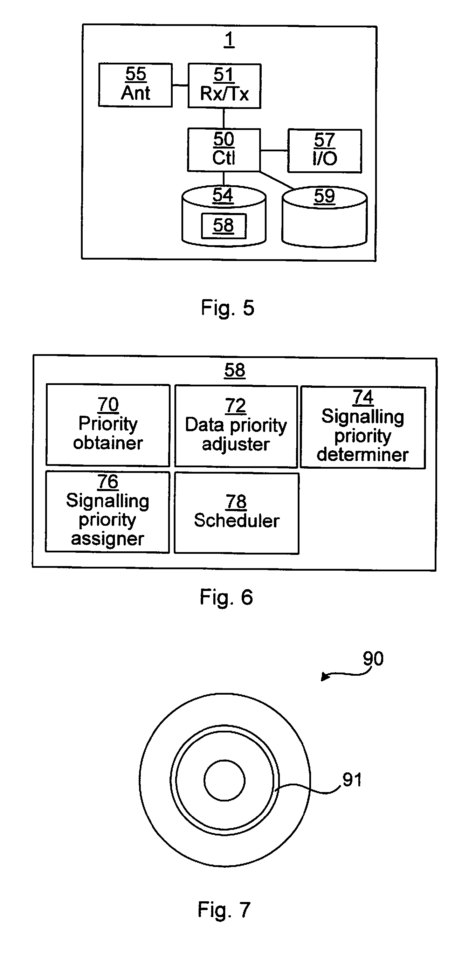

Fig 5 is a schematic diagram showing some components of the radio network node of Figs 1-3. A processor 50 is provided using any combination of one or more of a suitable central processing unit (CPU), multiprocessor, microcontroller, digital signal processor (DSP), application specific integrated circuit etc., capable of executing software instructions 58 stored in a memory 54, which can thus be a computer program product. The processor 50 can be configured to execute the method described with reference to Figs 4A-B above.

The memory 54 can be any combination of read and write memory (RAM) and read only memory (ROM). The memory 54 also comprises persistent storage, which, for example, can be any single one or combination of magnetic memory, optical memory, solid state memory or even remotely mounted memory.

A data memory 59 is also provided for reading and/or storing data during execution of software instructions in the processor 50. The data memory 59 can be any combination of read and write memory (RAM) and read only memory (ROM). For example, the data memory 59 can store priorities for messages of different bearers.

The radio network node 1 further comprises an I/O interface 57 for communicating with other external entities. Optionally, the I/O interface 57 also includes a user interface.

The radio network node 1 also comprises one or more transceivers 51, comprising analogue and digital components, and a suitable number of antennas 55 for wireless communication with wireless devices as shown in Fig 1.

Other components of the radio network node 1 are omitted in order not to obscure the concepts presented herein.

Fig 6 is a schematic diagram showing functional modules of the software instructions 58 of the radio network node of Fig 5 according to one embodiment. The modules are implemented using software instructions such as a computer program executing in the radio network node 1. The modules correspond to the steps in the methods illustrated in Figs 4A-B.

A priority obtainer 70 is arranged to obtain data priorities for SRBs. This module corresponds to the *obtain 1^{st} data priority* step 40 and the *obtain 2^{nd} data priority* step 41 of Figs 4A-B.

A data priority adjuster 72 is arranged to adjust data priorities to provide respective signalling priority slots between two consecutive data priorities. This module corresponds to the *adjust data priorities* step 41 of Fig 4B.

A signalling priority determiner 74 is arranged to determine the first signalling priority to be lower than or equal to the second data priority when the second data priority is higher than the first data priority. This module corresponds to the *determine signalling priority* step 44 of Figs 4A-B.

A signalling priority assigner 76 is arranged to assign the first signalling priority to the message of the SRB of the first service. This module corresponds to the *assign signalling priority* step 46 of Figs 4A-B.

A scheduler 78 is arranged to schedule transmission of the message based on the signalling priority. This module corresponds to the *schedule* step 48 of Fig 4B.

Fig 7 shows one example of a computer program product comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 54 of Fig 5. While the computer program 91 is here schematically shown as a track on the depicted optical disk, the computer program can be stored in any way which is suitable for the computer program product, such as a removable solid state memory, e.g. a Universal Serial Bus (USB) drive.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for determining first signalling priority of a message of a signalling radio bearer of a first service, the method being performed in a radio network node (1) of a cellular communication network (8) and comprising the steps of:
obtaining (40) a first data priority associated with a data radio bearer of the first service;
obtaining (41) a second data priority associated with a data radio bearer of a second service;
determining (44) the first signalling priority to be lower than or equal to the second data priority when the second data priority is higher than the first data priority; and
assigning (46) the first signalling priority to the message of the signalling radio bearer of the first service.

2. The method according to claim 1, wherein the step of determining (44) comprises determining the first signalling priority to be lower than the second data priority when the second data priority is higher than the first data priority.

3. The method according to claim 2, further comprising the step of:
adjusting (42) the first data priority and second data priority to provide respective signalling priority slots between each set of two consecutive data priorities; and wherein
the step of determining (44) the signalling priority comprises determining the first signalling priority to correspond to one of the signalling priority slots.

4. The method according to claim 3, wherein the step of adjusting (42) data priorities comprises multiplying previous data priorities with a constant.

5. The method according to any one of the preceding claims, wherein the step of obtaining (40) a first data priority comprises obtaining the first data priority from a Quality of Service Class Identifier of a message of the first data radio bearer; and the step of obtaining (41) a second data priority comprises obtaining the second data priority from a Quality of Service Class Identifier of a message of the second data radio bearer.

6. The method according to any one of the preceding claims, wherein the step of obtaining (40) a first data priority comprises obtaining the first data priority from a Allocation and Retention Priority of the first data radio bearer; and the step of obtaining (41) a second data priority comprises obtaining the second data priority from a Allocation and Retention Priority of the second data radio bearer.

7. The method according to any one of the preceding claims, further comprising the step of:
scheduling (48) transmission of the message based on the signalling priority.

8. A radio network node (1) for determining priority of a message of a signalling radio bearer of a first service of a cellular communication network, the radio network node (1) comprising:
a processor (60); and
a memory (64) storing instructions (66) that, when executed by the processor, causes the radio network node (1) to:
obtain a first data priority associated with a data radio bearer of the first service;
obtain a second data priority associated with a data radio bearer of a second service;
determine the first signalling priority to be lower than or equal to the second data priority when the second data priority is higher than the first data priority; and
assign the first signalling priority to the message of the signalling radio bearer of the first service.

9. The radio network node (1) according to claim 8, further comprising instructions that, when executed by the processor, causes the radio network node (1) to:
adjust data priorities to provide respective signalling priority slots between two consecutive data priorities; and wherein
the instructions to determine the signalling priority comprise instructions that, when executed by the processor, causes the radio network node (1) to determine the signalling priority to correspond to one of the signalling priority slots.

10. The radio network node (1) according to claim 9, wherein the instructions to adjust data priorities comprise instructions that, when executed by the processor, causes the radio network node (1) to multiply previous data priorities with a constant.

11. The radio network node (1) according to any one of claims 8 to 10, further comprising instructions that, when executed by the processor, causes the radio network node (1) to:
schedule transmission of the message based on the signalling priority.

12. A radio network node comprising:
means for obtaining, in a cellular communication network, a first data priority associated with a data radio bearer of a first service;
means for obtaining a second data priority associated with a data radio bearer of a second service;
means for determining the first signalling priority to be lower than or equal to the second data priority when the second data priority is higher than the first data priority; and
means for assigning the first signalling priority to the message of the signalling radio bearer of the first service.

13. A computer program (66, 91) for determining priority of a message of a signalling radio bearer of a first service, the computer program comprising computer program code which, when run on a radio network node (1) of a cellular communication network causes the radio network node (1) to:
obtain a first data priority associated with a data radio bearer of the first service;
obtain a second data priority associated with a data radio bearer of a second service;
determine the first signalling priority to be lower than or equal to the second data priority when the second data priority is higher than the first data priority; and
assign the first signalling priority to the message of the signalling radio bearer of the first service.

14. A computer program product (64, 90) comprising a computer program according to claim 13 and a computer readable means on which the computer program is stored.
